# EUROPEAN PATENT SPECIFICATION

(11) **EP 3 494 800 B1**
(45) Date of publication and mention of the grant of the patent: **17.04.2024**
(21) Application number: 17836942.7
(22) Date of filing: 01.08.2017
(51) Int. Cl.: A23L 7/109

(54) **COOKED GROOVED NOODLE**
GEKOCHTE GERILLTE NUDEL
NOUILLE RAINURÉE CUITE

(30) Priority: 02.08.2016 JP 2016152076
(43) Date of publication of application: 12.06.2019
(73) Proprietor: Nisshin Seifun Welna Inc., Tokyo 101-8441 (JP)
(72) Inventor: MAEDA, Tatsurou, Tokyo 103-8544 (JP)
(74) Representative: Casalonga
(86) International application number: PCT/JP2017/027821
(87) International publication number: WO 2018/025838

(56) References cited:
- JP-A- H04 211 337
- JP-A- H10 146 161
- JP-A- 2001 017 104
- JP-A- 2011 004 701
- JP-A- 2012 115 173
- US-A- 4 752 205
- US-A1- 2010 080 882
- Anonymous: "Kokado (a-kado) no Goannai", , 8 February 2013 (2013-02-08), XP055590005, Retrieved from the Internet: URL:https://web.archive.org/web/2013020810 4650/http://www.jfrl.or.jp/item/nutrition/ post-35.html
- Anonymous: "A1 dente o Kagakuteki ni Kaimei Nisshin ga MRI de Pasta o Sokutei", IT media, 12 April 2002 (2002-04-12), XP055590022, Retrieved from the Internet: URL:http://www.itmedia.co.jp/news/bursts/0 204/12/ 02.html

## Description

### TECHNICAL FIELD

The present invention relates to a cooked grooved noodle, and in particular, relates to a cooked grooved noodle of which grooves are closed by cooking.

### BACKGROUND ART

In general, spaghetti is deemed to have good texture when eaten in a state of so-called "al dente". The "al dente" generally refers to a state where spaghetti has a half-boiled core portion having a diameter of approximately one hair at the center, and it is considered that distinctive texture can be obtained by synergistic effect of hardness of a center part of a noodle string and gradation of hardness from the vicinity of a soft surface to a hard center part of the noodle string. However, because a spaghetti noodle is solid without gaps, hot water penetrates very slowly into the noodle string when the spaghetti noodle is boiled for cooking. The boiling time increases accordingly, and the skill is needed to boil a spaghetti noodle to obtain a half-boiled core portion at the center of the noodle string as well as achieving good hardness balance between the vicinity of the surface and the center part, that is, the "al dente" state, which leads to good texture.

US20100080882A1 discloses grooved noodles having grooves formed along the longitudinal direction of a single noodle band, and a process for producing the same. Conventionally, there has been proposed a noodle having a groove or slit formed along a longitudinal direction of the noodle string for the purpose of achieving a shortened boiling time. For example, Patent Literature 1 discloses a noodle having a single wedge-shaped groove with a depth of 1/2 to 4/5 of the diameter of the noodle string having a substantially circular cross section. However, if the wedge-shaped groove reaches the center part of the noodle string in cross section, heat would easily penetrate not only the vicinity of the surface but also the center part of the noodle string during cooking, so that, although boiling time of the noodle can be shortened as compared to a noodle without grooves, the noodle would be entirely softened and good texture could not be achieved.

In addition, Patent Literature 2 discloses a noodle formed with a solid center part having a circular cross section and a plurality of grooves each having a width that becomes larger at an innermost part than at an opening part. However, such grooves each having a width that becomes larger at an innermost part than at an opening part would not be sufficiently filled up but remain upon completion of cooking of the noodle, so that the noodle would have a completely different texture from that of a noodle without grooves and could not achieve good texture.

Accordingly, it is difficult for the noodle disclosed in Patent Literature 1 or 2 to be boiled to obtain a half-boiled core portion at the center of the noodle string as well as achieving good hardness balance between the vicinity of the surface and the center part of the noodle string, that is, the "al dente" state, which leads to good texture.

To cope with it, in an attempt to boil a noodle to obtain a half-boiled core portion at the center of the noodle string as well as achieving good hardness balance between the vicinity of the surface and the center part of the noodle string, which leads to good texture, Patent Literatures 3 and 4 each propose a grooved noodle formed with a plurality of grooves each of which has a cross-sectional shape extending as spirally curving from a center part having a circular cross section to the surface of the noodle string.

### CITATION LIST

### PATENT LITERATURE

Patent Literature 1: JP 3658477 B
Patent Literature 2: JP H4-211337 A
Patent Literature 3: JP 5102252 B
Patent Literature 4: JP 5726493 B

### SUMMARY OF INVENTION

### TECHNICAL PROBLEMS

However, although the grooved noodles described in Patent Literatures 3 and 4 can achieve reduction in boiling time while the texture with a half-boiled core portion can be achieved, the texture thereof is still not sufficient in terms of the balance in hardness between the vicinity of the surface and the center part of the noodle string, and when the grooved noodles are boiled to have a half-boiled core portion having a diameter of approximately one hair like a noodle without grooves, texture of the grooved noodles is still insufficient as a whole.

In other words, it is unclear that when a grooved noodle is boiled, specifically what diameter of a half-boiled core portion will lead to good texture of the noodle as a whole, and thus it is difficult to boil the grooved noodle to obtain good hardness balance between the vicinity of the surface and the center part of the noodle string.

The present invention is made to overcome the above problem of the prior art, and an object of the invention is to provide a cooked grooved noodle having good balance in hardness between the vicinity of the surface and the center part of a noodle string and thus having good texture.

### SOLUTION TO PROBLEMS

The present invention is defined by the claims.

According to the present invention, the cooked grooved noodle (11, 21, 31, 41) has a plurality of grooves (12, 22, 32, 42) before cooking formed along a longitudinal direction (L) of a noodle string, a substantially circular configuration (C) in cross section of the noodle string and a solid region (S) at a center part of a cross section of the noodle string,
the cooked grooved noodle (11, 21, 31, 41) comprising, after cooking, a core which accounts for 10% to 15% of a cross-sectional area of the noodle string with the plurality of grooves (12, 22, 32, 42) being closed after cooking and which is not gelatinized,
wherein each of the plurality of grooves (12, 22, 32, 42) extends from a surface of the noodle string to an inside of the noodle string in cross section of the noodle string, has a width (W) of an opening part (13, 23, 33, 43) of 0.1 mm to 0.4 mm at the surface of the noodle string, and has a constant groove width or a gradually narrowing groove width from the opening part (13, 23, 33, 43) to the inside of the noodle string,
wherein a diameter (D1) of the noodle string is set to 1.8 mm to 2.8 mm.

Preferably, the solid region has a substantially circular shape in cross section of the noodle string, and has an area of 15% to 50% with respect to the cross-sectional area of the noodle string assuming that the plurality of grooves are not provided.

In addition, it is more preferable that the solid region has an area of 20% to 30% with respect to the cross-sectional area of the noodle string assuming that the plurality of grooves are not provided.

The core may be observed as a bright part in a crossed Nicols image.

### ADVANTAGEOUS EFFECTS OF INVENTION

According to the present invention, because a cooked grooved noodle includes a core which accounts for 10% to 15% of a cross-sectional area of a noodle string obtained with the plurality of grooves being closed after cooking and which is not gelatinized, the cooked grooved noodle having good balance in hardness between the vicinity of the surface and the center part of the noodle string and thus having good texture can be obtained.

### BRIEF DESCRIPTION OF DRAWINGS

[FIG. 1] FIG. 1 is a perspective view illustrating a grooved noodle before cooking for obtaining a cooked grooved noodle according to Embodiment of the present invention.
[FIG. 2] FIG. 2 is a cross-sectional view illustrating the grooved noodle before cooking for obtaining a cooked grooved noodle according to Embodiment.
[FIGS. 3] FIGS. 3 are images of a sample prepared by using the cooked grooved noodle according to Embodiment. FIG. 3(A) is a crossed Nicols image taken by using two polarizing plates and FIG. 3(B) is an image taken without using a polarizing plate.
[FIG. 4] FIG. 4 is a cross-sectional view illustrating a grooved noodle before cooking for obtaining a cooked grooved noodle according to a variation of Embodiment.
[FIG. 5] FIG. 5 is a cross-sectional view illustrating a grooved noodle before cooking for obtaining a cooked grooved noodle according to another variation of Embodiment.
[FIG. 6] FIG. 6 is a cross-sectional view illustrating a conventional grooved noodle.

### DESCRIPTION OF EMBODIMENTS

An Embodiment of the present invention is described below based on the appended drawings.

### Embodiment

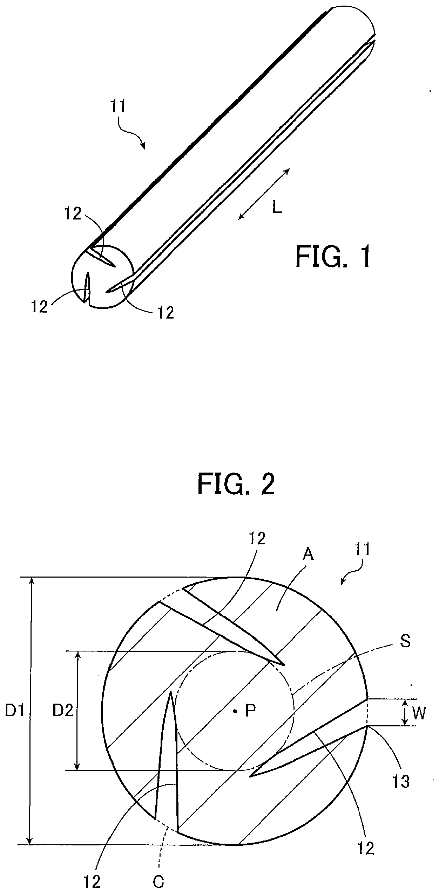

FIG. 1 illustrates a grooved noodle 11 before cooking for obtaining a cooked grooved noodle according to Embodiment of the present invention. The grooved noodle 11 is consisted of a dried spaghetti noodle having a substantially circular configuration in cross section and elongating along a longitudinal direction Z of a noodle string. At an outer periphery of the grooved noodle 11, three grooves 12 are formed along the longitudinal direction L of the noodle string.

As shown in FIG. 2, assuming that the noodle does not have the three grooves 12 in cross section, the noodle string has a substantially circular configuration C with a diameter D1. The area surrounded by the substantially circular configuration C is defined as a whole noodle string region A. The three grooves 12 are arranged at intervals of 120° along the circumferential direction of the noodle string, i.e., arranged so as to divide the noodle string into three in the circumferential direction. Each of the three grooves 12 extends from an opening part 13 formed on the surface of the noodle string toward the inside of the noodle string. Each of the grooves 12 has a width gradually narrowing from the opening part 13 to the inside of the noodle string.

Furthermore, the three grooves 12 are formed such that a circular solid region S which has a diameter D2 taking a center point P of the noodle as its center is secured at the center part of the noodle string.

Although the size of the grooved noodle 11 is not specifically limited, a diameter D1 of the noodle string is set to 1.8 mm to 2.8 mm, and a length of the noodle string to, for example, 80 mm or 300 mm. The grooved noodle 11 having such a configuration can be produced by extruding a noodle material using a die formed with through-holes corresponding to the cross-sectional shape of the noodle string illustrated in FIG. 2, followed by drying.

When the grooved noodle 11 is placed in a high-temperature water for cooking, water and heat penetrate the noodle string through the outer peripheral surface of the noodle string, and starch contained in the noodle string is gelatinized by water and heat, that is, becomes α-starch. Furthermore, high-temperature water also enters the three grooves 12, and thus water and heat penetrate into the noodle string through not only the outer peripheral surface of the noodle string but the inner walls of the three grooves 12. In this process, the center point P of the noodle string is surrounded by the solid region S in the cross section of the noodle string and thus the vicinity of the center point P of the noodle string is unlikely to be affected from water and heat. Hence, the starch contained in the grooved noodle 11 is hardly gelatinized in the vicinity of the center point P of the noodle string.

When the boiling time of the grooved noodle 11 is long, water and heat which penetrate into the noodle string increase and thus the portion in which starch is not gelatinized in the center part of the noodle string decreases. On the other hand, when the boiling time is short, the portion in which starch is not gelatinized in the center part of the noodle string increases. The portion in which starch is not gelatinized in the center part of the noodle string at the completion of cooking of the grooved noodle 11 is defined as a core.

The grooved noodle 11 swells due to water and heat which penetrate into the inside of the noodle string, whereby the three grooves 12 are closed so that the noodle string forms a substantially circular configuration in cross section, and thus the noodle can obtain similar appearance and texture to those of a noodle without grooves.

Next, the ratio of the core area to the area of the whole cross section of the cooked grooved noodle obtained by cooking the grooved noodle 11 is calculated and the relationship between the area ratio and texture of the cooked grooved noodle is studied.

A section-type sample is prepared using a noodle string after cooking, and then the area of whole cross section of the noodle sample and the core area of the noodle sample are measured.

The noodle string after cooking is embedded in a plastic cell together with an OCT (Optimal Cutting Temperature) compound, that is, an embedding medium for preparing a frozen tissue section, and the plastic cell is rapidly frozen. A transparent adhesive film is attached to the end of the noodle string after cooking which is embedded in the OCT compound and frozen, and the noodle string is sliced using cryostat microtome at the position apart from the adhesive film by 30 µm, thereby preparing a section-type sample. In this process, dying treatment is not performed on the sample.

The prepared noodle sample is set on a polarizing microscope. The polarizing microscope has a first polarizing plate and a second polarizing plate, and the first polarizing plate and the second polarizing plate are placed in a so-called crossed Nicols position. The first polarizing plate transmits polarized light that oscillates in a first-direction oscillation plane extending along a surface of the first polarizing plate, and the second polarizing plate transmits polarized light that oscillates in a second-direction oscillation plane orthogonal to the oscillation plane of the polarized light transmitted by the first polarizing plate.

The core of the noodle sample is constituted of non-gelatinized starch, and the non-gelatinized starch has a crystal structure. Therefore, when the core of the noodle sample is irradiated with polarized light which has passed through the first polarizing plate, the polarized light is birefracted, and light which has passed through the core of the noodle sample includes polarized light with an oscillation plane different from that of the polarized light which has passed through the first polarizing plate.

On the other hand, gelatinized starch does not have a crystal structure, and the vicinity of the surface of the noodle sample is constituted of gelatinized starch. Therefore, an oscillation plane of light which has passed through the vicinity of the surface of the noodle sample corresponds to the first-direction oscillation plane of the polarized light which has passed through the first polarizing plate.

Since the light which has passed through the core of the noodle sample includes polarized light with an oscillation plane different from that of the polarized light which has passed through the first polarizing plate, part of the light which has passed through the core of the noodle sample passes through the second polarizing plate. On the other hand, an oscillation plane of light which has passed through the vicinity of the surface of the noodle sample corresponds to the first-direction oscillation plane of the polarized light which has passed through the first polarizing plate. Furthermore, the first polarizing plate and the second polarizing plate are placed in a so-called crossed Nicols position, and therefore, the light which has passed through the vicinity of the surface of the noodle sample is blocked by the second polarizing plate.

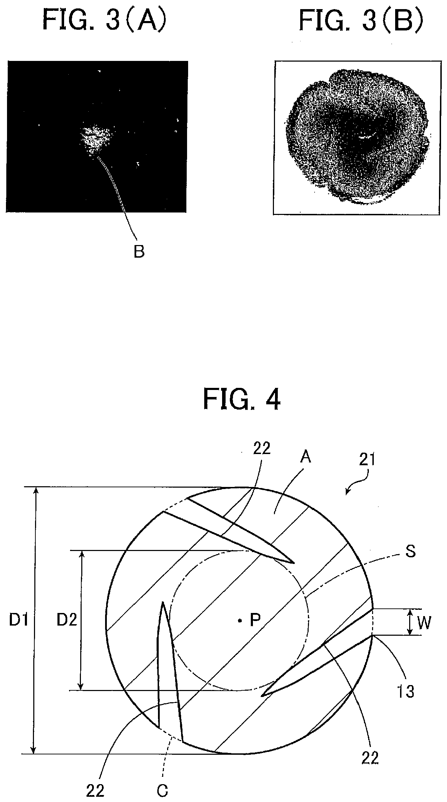

Accordingly, when a so-called crossed Nicols image showing a cross section of a sample is taken using a polarizing microscope digital camera attached to the polarizing microscope, the crossed Nicols image as shown in FIG. 3(A) is obtained, for example. In this crossed Nicols image, the light which has passed through the core of the noodle sample appears as a bright part B. Meanwhile, since the light which has passed through the vicinity of the surface of the noodle sample is blocked by the second polarizing plate, the part corresponding to the vicinity of the surface of the noodle string is a dark part. The obtained crossed Nicols image is analyzed using known image analysis software to thereby measure the area of the bright part B, that is, the core area.

When the size of the bright part B of the crossed Nicols image varies with rotation of the first polarizing plate and the second polarizing plate, it is possible to more accurately measure the core area of the noodle sample by adjusting the position relationship between the first polarizing plate and the second polarizing plate such that the size of the bright part B becomes the largest.

When a sample is taken without using the first polarizing plate and the second polarizing plate of the polarizing microscope, the light which has passed through the vicinity of the surface of the noodle string appears as a bright part. For example, the image as shown in FIG. 3(B) is obtained. This image is analyzed using known image analysis software to thereby measure the area of the whole cross section of the noodle string after cooking.

It is thus possible to calculate the ratio of the core area to the area of the whole cross section of the noodle string.

The cooked grooved noodle according to Embodiment is produced by boiling the grooved noodle 11 for boiling time which is controlled such that the ratio of the core area to the area of the whole cross section of the noodle string falls within a range of 10% to 15%. When texture of the cooked grooved noodle is evaluated, the evaluation result of good texture is obtained.

When the ratio of the core area to the area of the whole cross section of the noodle string is in a range of 10% to 15% after cooking of the grooved noodle 11, a half-boiled core portion remains at the center part of the noodle string and hardness balance between the vicinity of the soft surface and the hard center part is achieved, resulting in good texture. When the ratio of the core area to the area of the whole cross section of the noodle string is less than 10%, gelatinization of starch contained in the noodle excessively proceeds and the noodle would be entirely softened, resulting in unsatisfactory texture in terms of hardness. On the other hand, when the ratio of the core area to the area of the whole cross section of the noodle string is more than 15%, non-gelatinized starch excessively remains and a half-boiled core portion becomes large, resulting in too hard texture.

In other words, when, in cooking a grooved noodle, the boiling time is controlled to adjust the degree of boiling such that the ratio of the core area to the area of the whole cross section of the noodle string falls within a range of 10% to 15%, this makes it possible to easily obtain a cooked grooved noodle having good hardness balance between the vicinity of the surface and the center part of the noodle string, resulting in good texture, that is, the al dente state, while reducing boiling time.

As long as the ratio of the core area to the area of the whole cross section of the noodle string is in a range of 10% to 15% after cooking, the grooved noodle 11 may be cooked in a way other than boiling, and the grooved noodle may be cooked by steaming or using a microwave. Moreover, as long as the ratio of the core area to the area of the whole cross section of the noodle string is in a range of 10% to 15%, the grooved noodle 11 may be cooked in a way of immersing the grooved noodle 11 in water having a temperature of less than 50°C so that water penetrates the inside of the noodle string, and thereafter heating the noodle string.

As long as the three grooves 12 formed in the grooved noodle 11 are each closed after cooking and the ratio of the core area to the area of the whole cross section of the noodle string is in a range of 10% to 15%, the shapes and the positions of the grooves 12 may be set arbitrarily and the diameter D2 of the solid region S may be set arbitrarily.

The grooved noodle 11 shown in FIG. 2 is formed such that, for example, the diameter D1 of the noodle string is 2.2 mm and the diameter D2 of the solid region S is 1 mm. The area of the whole noodle string region A of the grooved noodle 11 is calculated as 1.1 × 1.1 × 3.14 = 3.8 mm², the area of the solid region S is calculated as 0.5 × 0.5 × 3.14 = 0.785 mm², and thus the ratio r of the area of the solid region S to the area of the whole noodle string region A is 20.7%. However, the ratio r of the area of the solid region S to the area of the whole noodle string region A is not limited to this value, and the above ratio r may be adjusted by changing the size of the solid region S.

For example, as a grooved noodle 21 shown in FIG. 4, three grooves 22 may be formed such that the diameter D1 of the noodle string is 2.2 mm and the diameter D2 of the solid region S is 1.2 mm. The area of the solid region S is calculated as 0.6 × 0.5 × 3.14 = 1.13 mm² and the ratio r of the area of the solid region S to the area of the whole noodle string region A is 29.7%.

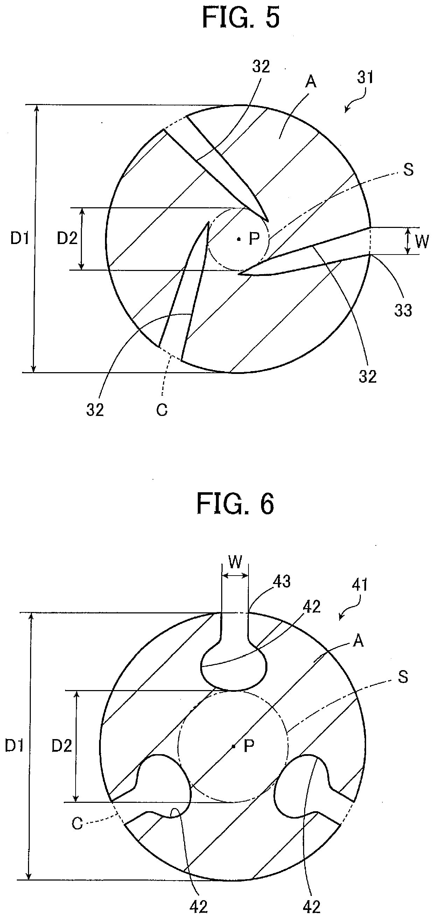

Moreover, for example, as a grooved noodle 31 shown in FIG. 5, three grooves 32 may be formed such that the diameter D1 of the noodle string is 2.2 mm and the diameter D2 of the solid region S is 0.6 mm. The area of the solid region S is calculated as 0.3 × 0.3 × 3.14 = 0.28 mm² and the ratio r of the area of the solid region S to the area of the whole noodle string region A is 7.4%.

Setting the ratio r of the area of the solid region S to the area of the whole noodle string region A to be 15% to 50% as in the grooved noodle 11 and the grooved noodle 21 leads to good balance between the vicinity of the surface and the center part of the noodle string, and is preferable. Moreover, setting the ratio r of the area of the solid region S to the area of the whole noodle string region A to be 20% to 30% as in the grooved noodle 11 and the grooved noodle 21 leads to particularly good balance between the vicinity of the surface and the center part of the noodle string, and is more preferable.

Although the number of the grooves formed in the grooved noodle 11, the grooved noodle 21 and the grooved noodle 31 is three, the number of grooves may be two or four or more as long as each of the grooves is closed by cooking and the ratio of the core area to the area of the whole cross section of the noodle string is in a range of 10% to 15%.

As described above, since each of the grooves 12 has a width gradually narrowing from the opening part 13 to the inside of the noodle string, it is possible to easily close the three grooves 12 by setting the opening width W of the opening part 13 to 0.1 mm to 0.4 mm. It is also possible to easily close the three grooves 12 even if each of the grooves 12 is formed so as to have a constant width from the opening part 13 to the inside of the noodle string.

### EXAMPLES

With regard to the cooked grooved noodle obtained by cooking the grooved noodle in which three grooves are formed as described in Embodiment, a plurality of dried grooved noodles were produced with dimensions of the respective parts being varied, and the produced dried grooved noodles were boiled for varying boiling time, thereby producing a plurality of cooked grooved noodles.

### Example 1

Dough was obtained by mixing 26 parts by weight of water with 100 parts by weight of durum semolina and kneading the resulting mixture. A die having through-holes corresponding to the cross-sectional shape of the noodle string with three grooves as illustrated in FIG. 2 was attached to a pasta machine, from which the dough kneaded was extruded under a reduced pressure of -600 mmHg, and then the molded dough was dried by a conventional method to thereby produce a dried spaghetti noodle.

With regard to the dimension shown in FIG. 2, the diameter D1 of the noodle string was 2.2 mm, the diameter D2 of the solid region S was 1 mm and each of the grooves 12 had an opening width W of the opening part 13 of 0.17 mm. The area of the whole noodle string region A is calculated as 1.1 × 1.1 × 3.14 = 3.8 mm², the area of the solid region S is calculated as 0.5 × 0.5 × 3.14 = 0.785 mm² and the ratio r of the area of the solid region S to the area of the whole noodle string region A is 20.7%. The produced dried spaghetti noodle was boiled in boiling water for 2.5 minutes to produce a cooked spaghetti noodle.

### Example 2

Except that the produced dried spaghetti noodle was boiled in boiling water for 2.8 minutes, a cooked spaghetti noodle was produced in the same manner as that of Example 1.

### Example 3

Except that the produced dried spaghetti noodle was boiled in boiling water for 3 minutes, a cooked spaghetti noodle was produced in the same manner as that of Example 1.

### Example 4

Except that the produced dried spaghetti noodle was boiled in boiling water for 3.2 minutes, a cooked spaghetti noodle was produced in the same manner as that of Example 1.

### Example 5

Except that the produced dried spaghetti noodle was boiled in boiling water for 3.5 minutes, a cooked spaghetti noodle was produced in the same manner as that of Example 1.

### Example 6

Except that a dried spaghetti noodle was produced such that the diameter D1 of the noodle string was 2.2 mm, the diameter D2 of the solid region S was 1.2 mm, each of the grooves 22 had an opening width W of the opening part 23 of 0.17 mm, the area of the solid region S was 0.6 × 0.6 × 3.14 = 1.13 mm² and the ratio r of the area of the solid region S to the area of the whole noodle string region A was 29.7% in conformity with the shape shown in FIG. 4, and the produced dried spaghetti noodle was boiled in boiling water for 3.5 minutes, a cooked spaghetti noodle was produced in the same manner as that of Example 1.

### Example 7

Except that the produced dried spaghetti noodle was boiled in boiling water for 4.5 minutes, a cooked spaghetti noodle was produced in the same manner as that of Example 6.

### Example 8

Except that a dried spaghetti noodle was produced such that the diameter D1 of the noodle string was 2.2 mm, the diameter D2 of the solid region S was 0.6 mm, each of the grooves 32 had an opening width W of the opening part 33 of 0.17 mm, the area of the solid region S was 0.3 × 0.3 × 3.14 = 0.28 mm² and the ratio r of the area of the solid region S to the area of the whole noodle string region A was 7.4% in conformity with the shape shown in FIG. 5, and the produced dried spaghetti noodle was boiled in boiling water for 2.5 minutes, a cooked spaghetti noodle was produced in the same manner as that of Example 1.

### Comparative Example 1

Except that the produced dried spaghetti noodle was boiled in boiling water for 2 minutes, a cooked spaghetti noodle was produced in the same manner as that of Example 1.

### Comparative Example 2

Except that the produced dried spaghetti noodle was boiled in boiling water for 4 minutes, a cooked spaghetti noodle was produced in the same manner as that of Example 1.

### Comparative Example 3

Except that the produced dried spaghetti noodle was boiled in boiling water for 2.5 minutes, a cooked spaghetti noodle was produced in the same manner as that of Example 6.

### Comparative Example 4

Except that the produced dried spaghetti noodle was boiled in boiling water for 3.5 minutes, a cooked spaghetti noodle was produced in the same manner as that of Example 8.

### Comparative Example 5

Except that the produced dried spaghetti noodle was boiled in boiling water for 4.5 minutes, a cooked spaghetti noodle was produced in the same manner as that of Example 8.

### Comparative Example 6

Three grooves 42 are formed in a grooved noodle 41 shown in FIG. 6 and each of the three grooves 42 extends from an opening part 43 formed on the surface of the noodle string toward the inside of the noodle string. Each of the grooves 42 has a structure in which a width of an innermost part is larger than an opening width W of the opening part 43. With regard to the dimension shown in FIG. 6, the diameter D1 of the noodle string was set to 2.2 mm, the diameter D2 of the solid region S was set to 1 mm and the opening width W of the opening part 43 was set to 0.17 mm. The area of the solid region S is calculated as 0.5 × 0.5 × 3.14 = 0.785 mm² and the ratio r of the area of the solid region S to the area of the whole noodle string region A is 20.7%. Except that a dried spaghetti noodle was produced in conformity with the shape shown in FIG. 6 and the produced dried spaghetti noodle was boiled in boiling water for 2.5 minutes, a cooked spaghetti noodle was produced in the same manner as that of Example 1.

### Comparative Example 7

Except that the produced dried spaghetti noodle was boiled in boiling water for 3.5 minutes, a cooked spaghetti noodle was produced in the same manner as that of Comparative Example 6.

### Comparative Example 8

Except that the produced dried spaghetti noodle was boiled in boiling water for 4.5 minutes, a cooked spaghetti noodle was produced in the same manner as that of Comparative Example 6.

### Comparative Example 9

A cooked spaghetti noodle was produced by boiling a dried spaghetti noodle which has a diameter D1 of 1.6 mm and no groove (Blue, manufactured by Nisshin Foods Inc,) in boiling water for 6 minutes. Note that the area of the whole noodle string region A is equal to the area of the solid region S in a dried spaghetti noodle without grooves, and thus the ratio of the area of the solid region S to the area of the whole noodle string region A is 100%.

### Comparative Example 10

Except that the dried spaghetti noodle without grooves was boiled in boiling water for 7 minutes, a cooked spaghetti noodle was produced in the same manner as that of Comparative Example 9.

Each of the cooked spaghetti noodles produced as described above was cut into a length of 20 mm, embedded into an OCT compound (Tissue-Tek O.C.T compound, manufactured by Sakura Finetek Japan Co., Ltd) filling a plastic cell which had a dimension of 20 mm × 20 mm × 20 mm to the height of about 15 mm, and rapidly frozen in a freezer which was set to a temperature of -40°C. An adhesive film was attached to the edge surface of the frozen cooked spaghetti noodle and the cooked spaghetti noodle was sliced into a thickness of 30 µm from the adhesive film-attached surface using a cryostat microtome (CM1510S, manufactured by Leica Biosystems Nussloch GmbH) whose temperature was set to -20°C, thereby preparing a sample.

The prepared sample was set on a polarizing microscope (BX53, manufactured by Olympus Corporation) having two polarizing plates arranged in a so-called crossed Nicols position, and a crossed Nicols image of the sample was taken by a microscope digital CCD camera (DP72, manufactured by Olympus Corporation) attached to the polarizing microscope. Moreover, the obtained crossed Nicols image was analyzed using known image analysis software to thereby calculate the area of the bright part in the crossed Nicols image, that is, the core area.

The image of the sample was also taken without using the two polarizing plates of the polarizing microscope, the obtained image was analyzed using known image analysis software to thereby calculate the area of the whole cross section of the noodle string after cooking. Then, the ratio of the core area to the area of the whole cross section of the noodle string was calculated.

The produced cooked spaghetti noodles were evaluated for texture based on the evaluation criteria shown in Table 1 by ten persons, and the average of the evaluation results was adopted as an evaluation value in the texture evaluation. According to the evaluation criteria of Table 1, good texture with good balance in hardness between the vicinity of the surface and the center part of the noodle string of the cooked spaghetti noodle scores a high point, whereas poor texture because of a too hard or too soft center part of the noodle string scores a low point.

**[Table 1]**

| Table 1 | |
|---|---|
| Point | Texture of spaghetti noodle |
| 5 | Excellent texture, with extremely good balance in hardness between vicinity of soft surface and firm center part |
| 4 | Good texture, with good balance in hardness between vicinity of soft surface and firm center part |
| 3 | Balance in hardness between outer region and center region is relatively not satisfactory |
| 2 | Inferior texture, with bad balance in hardness between vicinity of soft surface and firm center part |
| 1 | Poor texture, with extremely bad balance in hardness between vicinity of soft surface and firm center part |

With respect to the cooked spaghetti noodles produced in Examples 1 to 8 and Comparative Examples 1 to 10, the core area was calculated and the texture was evaluated based on the evaluation criteria shown in Table 1 by ten persons, and the average of the evaluation results was obtained. The results thereof are shown in Table 2.

**[Table 2]**

| Table 2 | | | | | | | | | | | | | | | | | | |
|---|---|---|---|---|---|---|---|---|---|---|---|---|---|---|---|---|---|---|
| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
| Noodle diameter D1 (mm) | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 1.6 | 1.6 |
| Number of grooves | 3 | 3 | 3 | 3 | 3 | 3 | 3 | 3 | 3 | 3 | 3 | 3 | 3 | 3 | 3 | 3 | No groove | No groove |
| Area of solid region S/Area of whole noodle region A (%) | 20.7 | 20.7 | 20.7 | 20.7 | 20.7 | 29.7 | 29.7 | 7.4 | 20.7 | 20.7 | 29.7 | 7.4 | 7.4 | 20.7 | 20.7 | 20.7 | 100 | 100 |
| Boiling time (minute) | 2.5 | 2.8 | 3 | 3.2 | 3.5 | 3.5 | 4.5 | 2.5 | 2 | 4 | 2.5 | 3.5 | 4.5 | 2.5 | 3.5 | 4.5 | 6 | 7 |
| Groove state after cooking | Closed | Closed | Closed | Closed | Closed | Closed | Closed | Closed | Closed | Closed | Closed | Closed | Closed | Not closed | Not closed | Not closed | No groove | No groove |
| Core area of noodle/Area of whole cross section of noodle (%) | 14.9 | 13.5 | 12.5 | 11.7 | 10.3 | 14.5 | 10.7 | 11.1 | 20.7 | 6.5 | 19.4 | 7.2 | 4.5 | 17.9 | 11.6 | 5.7 | 13.3 | 8.8 |
| Average of evaluation results | 3.2 | 3.8 | 4.5 | 3.9 | 3.3 | 3.6 | 3.8 | 3.2 | 1.9 | 2.6 | 2.3 | 2.3 | 2.1 | 1.4 | 1.6 | 1.3 | 2.9 | 4.4 |

In Table 2, when attention is paid to the cooked spaghetti noodles obtained by boiling the grooved dried spaghetti noodles, every groove formed in dried spaghetti noodles of Examples 1 to 8 and Comparative Examples 1 to 5 was closed. On the contrary, every groove formed in dried spaghetti noodles of Comparative Examples 6 and 7 was not closed. This is probably because, since the three grooves in each of the cooked spaghetti noodles of Comparative Examples 6 and 7 had widths at their innermost parts larger than those at their opening parts, the grooves were not closed even though the spaghetti noodles swelled during boiling.

With each of the cooked spaghetti noodles of Examples 1 to 8 and Comparative Example 7, the ratio of the core area to the area of the whole cross section of the noodle string fell within the range of 10% to 15%. On the contrary, with each of the cooked spaghetti noodles of Comparative Examples 1 to 6 and 8, the ratio of the core area to the area of the whole cross section of the noodle string did not fall within the range of 10% to 15%.

For every cooked spaghetti noodle produced in Examples 1 to 8, the average of the evaluation results of the texture evaluation was higher than 3.0. On the contrary, for every cooked spaghetti noodle produced in Comparative Examples 1 to 8, the average of the evaluation results was lower than 3.0. This is presumably because when the ratio of the core area to the area of the whole cross section of the noodle string falls within the range of 10% to 15%, the noodle string can have good balance in hardness between the vicinity of the surface and the center part thereof, resulting in good texture. Meanwhile, when the ratio of the core area to the area of the whole cross section of the noodle string is less than 10%, the center part of the noodle string is too soft, resulting in bad texture, and when the ratio of the core area to the area of the whole cross section of the noodle string is more than 15%, the center part of the noodle string is too hard, resulting in bad texture.

For the cooked spaghetti noodle of Comparative Example 7, although the ratio of the core area to the area of the whole cross section of the noodle string fell within the range of 10% to 15%, the average of the evaluation results was lower than 3.0. This is probably because the grooves formed in the spaghetti noodle were not closed but remained after cooking and thereby provided different texture from that of a noodle without grooves, and thus good texture could not be obtained.

From the above results, it was revealed that when the ratio of the core area to the area of the whole cross section of the noodle string fell within the range of 10% to 15% and the grooves were closed after the grooved dried spaghetti noodle was boiled, the vicinity of the surface and the center part of the noodle string had good balance in hardness, resulting in good texture.

With respect to the cooked spaghetti noodles produced in Examples 1 to 5 and Comparative Examples 1 and 2, the cooked spaghetti noodles were produced by boiling dried spaghetti noodles produced under the same conditions for varying boiling time, and the core and the average of the evaluation results of the texture evaluation of the cooked spaghetti noodles varied with boiling time. This similarly applies to the cooked spaghetti noodles of Examples 6 and 7 and Comparative Example 3, and the cooked spaghetti noodles of Example 8 and Comparative Examples 4 and 5. From the above results, it was revealed that when a grooved dried spaghetti noodle was boiled such that the ratio of the core area to the area of the whole cross section of the noodle string fell within the range of 10% to 15% by controlling the boiling time according to the shape of the grooved dried spaghetti noodle, a cooked spaghetti noodle having good hardness balance between the vicinity of the surface and the center part of the noodle string and thus achieving good texture could be obtained.

When attention is paid to Examples 3, 7 and 8, the dried spaghetti noodles produced in Examples 3 and 7 each had the ratio r of the area of the solid region S to the area of the whole noodle string region A falling within the range of 15% to 50%, but the ratio r of the dried spaghetti noodle produced in Example 8 did not fall within the range. Furthermore, the cooked spaghetti noodles produced in Examples 3 and 7 each had a higher average of evaluation results of the texture evaluation than that of Example 8. From the above results, it was revealed that when the above ratio r fell within the range of 15% to 50%, good hardness balance between the vicinity of the surface and the center part of the noodle string was achieved by controlling the boiling time and thus a cooked spaghetti noodle having further good texture could be obtained.

As shown in Table 2, it took 6 minutes to boil the spaghetti noodle without grooves of Comparative Example 9 such that the cooked spaghetti noodle had the ratio of the core area to the area of the whole cross section of the noodle string of 13.3%. This boiling time is longer than those of the cooked spaghetti noodles of Examples 1 to 8. For the cooked spaghetti noodle of Comparative Example 9, the average of the evaluation results of the texture evaluation was as low as 2.9 even though the ratio of the core area to the area of the whole cross section of the noodle string fell within the range of 10% to 15%. This is probably because a spaghetti noodle without grooves would be too hard as a whole and had bad texture even when the ratio of the core area to the area of the whole cross section of the noodle string fell within the range of 10% to 15%.

For the cooked spaghetti noodle of Comparative Example 10, the average of the evaluation results of the texture evaluation was as high as 4.4. However, it took 7 minutes to boil the noodle, which was one minute longer than that taken in Comparative Example 9. It was difficult for a spaghetti noodle without grooves to reduce the boiling time while achieving good texture as a whole.

### REFERENCE SIGNS LIST

11, 21, 31, 41 Grooved noodle;
12, 22, 32, 42 Groove;
13, 23, 33, 43 Opening part;
A Whole noodle string region;
S Solid region;
B Bright part;
C Configuration;
L Longitudinal direction of noodle string;
P Center point;
W Opening width

## Claims

1. A cooked grooved noodle (11, 21, 31, 41) which has a plurality of grooves (12, 22, 32, 42) before cooking formed along a longitudinal direction (L) of a noodle string, a substantially circular configuration (C) in cross section of the noodle string and a solid region (S) at a center part of a cross section of the noodle string,
the cooked grooved noodle (11, 21, 31, 41) comprising, after cooking, a core which accounts for 10% to 15% of a cross-sectional area of the noodle string with the plurality of grooves (12, 22, 32, 42) being closed after cooking and which is not gelatinized,
wherein each of the plurality of grooves (12, 22, 32, 42) extends from a surface of the noodle string to an inside of the noodle string in cross section of the noodle string, has a width (W) of an opening part (13, 23, 33, 43) of 0.1 mm to 0.4 mm at the surface of the noodle string, and has a constant groove width or a gradually narrowing groove width from the opening part (13, 23, 33, 43) to the inside of the noodle string,
wherein a diameter (D1) of the noodle string is set to 1.8 mm to 2.8 mm.

2. The cooked grooved noodle (11, 21, 31, 41) according to claim 1, wherein the solid region (S) has a substantially circular shape in cross section of the noodle string, and has an area of 15% to 50% with respect to the cross-sectional area of the whole noodle string region (A) of the substantially circular configuration (C) in cross section of the noodle string.

3. The cooked grooved noodle (11, 21, 31, 41) according to claim 2, wherein the solid region (S) has an area of 20% to 30% with respect to the cross-sectional area of the whole noodle string region (A) of the substantially circular configuration (C) in cross section of the noodle string.

4. The cooked grooved noodle (11, 21, 31, 41) according to any one of claims 1 to 3, wherein the core is observed as a bright part (B) in a crossed Nicols image taken using a polarizing microscope digital camera attached to a polarizing microscope.

## Patentansprüche

1. Gekochte gerillte Nudel (11, 21, 31, 41), die vor dem Kochen eine Mehrzahl von Rillen (12, 22, 32, 42), die in einer Längsrichtung (L) einer Nudelschnur gebildet sind, eine im Wesentlichen runde Konfiguration (C) im Querschnitt der Nudelschnur und eine feste Region (S) in einem mittleren Teil eines Querschnittsabschnitts der Nudelschnur aufweist, wobei die gekochte gerillte Nudel (11, 21, 31, 41) nach dem Kochen einen Kern umfasst, der 10 % bis 15 % eines Querschnittsbereichs der Nudelschnur ausmacht, wobei die Mehrzahl von Rillen (12, 22, 32, 42) nach dem Kochen geschlossen sind und die nicht gelatiniert ist,
wobei jede der Mehrzahl von Rillen (12, 22, 32, 42) sich von einer Oberfläche der Nudelschnur zu einer Innenseite der Nudelschnur im Querschnittsbereich der Nudelschnur erstreckt, eine Breite (W) eines Öffnungsteils (13, 23, 33, 43) von 0,1 mm bis 0,4 mm an der Oberfläche der Nudelschnur aufweist und eine konstante Rillenbreite oder eine sich allmählich verengende Rillenbreite vom Öffnungsteil (13, 23, 33, 43) zum Inneren der Nudelschnur aufweist,
wobei ein Durchmesser (D1) der Nudelschnur auf 1,8 mm bis 2,8 mm eingestellt ist.

2. Gekochte gerillte Nudel (11, 21, 31, 41) nach Anspruch 1, wobei die feste Region (S) eine im Wesentlichen runde Gestalt im Querschnitt der Nudelschnur aufweist und einen Bereich von 15 % bis 50 % mit Bezug auf den Querschnittsbereich der gesamten Nudelschnurregion (A) der im Wesentlichen runden Konfiguration (C) im Querschnittsbereich der Nudelschnur aufweist.

3. Gekochte gerillte Nudel (11, 21, 31, 41) nach Anspruch 2, wobei die feste Region (S) einen Bereich von 20 % bis 30 % mit Bezug auf den Querschnittsbereich der gesamten Nudelschnurregion (A) der im Wesentlichen runden Konfiguration (C) im Querschnittsbereich der Nudelschnur aufweist.

4. Gekochte gerillte Nudel (11, 21, 31, 41) nach einem der Ansprüche 1 bis 3, wobei der Kern als heller Teil (B) in einem gekreuzten Nicols-Bild beobachtet wird, das unter Anwendung einer an ein polarisierendes Mikroskop angebrachten polarisierenden Digitalmikroskopkamera aufgenommen wird.

## Revendications

1. Nouille rainurée cuite (11, 21, 31, 41) qui présente une pluralité de rainures (12, 22, 32, 42) avant cuisson formées le long d'une direction longitudinale (L) d'un fil de nouille, une configuration sensiblement circulaire (C) en coupe transversale du fil de nouille et une région pleine (S) au niveau d'une partie centrale d'une coupe transversale du fil de nouilles,
la nouille rainurée cuite (11, 21, 31, 41) comprenant, après cuisson, un coeur qui représente 10 % à 15 % d'une surface de coupe transversale du fil de nouilles avec la pluralité de rainures (12, 22, 32, 42) fermée après cuisson et qui n'est pas gélatinisée,
dans laquelle chacune de la pluralité de rainures (12, 22, 32, 42) s'étend à partir d'une surface du fil de nouille jusqu'à un intérieur du fil de nouille en coupe transversale du fil de nouille, présente une largeur (W) d'une partie d'ouverture (13, 23, 33, 43) de 0,1 mm à 0,4 mm à la surface du fil de nouille, et présente une largeur de rainure constante ou une largeur de rainure rétrécissant progressivement à partir de la partie d'ouverture (13, 23, 33, 43) jusqu'à l'intérieur du fil de nouille,
dans laquelle un diamètre (D1) du fil de nouille est défini de 1,8 mm à 2,8 mm.

2. Nouille rainurée cuite (11, 21, 31, 41) selon la revendication 1, dans laquelle la région pleine (S) a une forme sensiblement circulaire en coupe transversale du fil de nouilles, et présente une surface de 15 % à 50 % par rapport à la surface de coupe transversale de la région entière de fil de nouille (A) de la configuration sensiblement circulaire (C) en coupe transversale du fil de nouille.

3. Nouille rainurée cuite (11, 21, 31, 41) selon la revendication 2, dans laquelle la région pleine (S) a une surface de 20 % à 30 % par rapport à la surface de coupe transversale de la région entière de fil de nouille (A) de la configuration sensiblement circulaire (C) en coupe transversale du fil de nouille.

4. Nouille rainurée cuite (11, 21, 31, 41) selon l'une quelconque des revendications 1 à 3, dans laquelle le coeur est observé comme une partie claire (B) dans une image de Nicols croisés prise à l'aide d'un appareil photo numérique de microscope polarisant fixé à un microscope polarisant.
